# EUROPÄISCHE PATENTSCHRIFT

(11) **EP 1 744 080 B1**
(45) Veröffentlichungstag und Bekanntmachung des Hinweises auf die Patenterteilung: **30.07.2008**
(21) Anmeldenummer: 05027878.7
(22) Anmeldetag: 20.12.2005
(51) Int. Cl.: F16H 9/02, F16H 55/54, B62M 9/04

(54) **Getriebevorrichtung mit drehmomentabhängiger und stufenloser Anpassung des Übersetzungsverhältnisses**
Torque-depending continuously variable transmission
Transmission à variation continue dépendente du couple

(30) Priorität: 11.07.2005 DE 102005032255; 25.07.2005 DE 102005034581
(43) Veröffentlichungstag der Anmeldung: 17.01.2007
(73) Patentinhaber: Pross, Bernhard, 72218 Wildberg (DE)
(72) Erfinder: Pross, Bernhard, 72218 Wildberg (DE)
(74) Vertreter: Altenburg, Udo

(56) Entgegenhaltungen:
- EP-A- 0 071 498
- DE-A1- 3 501 663
- DE-A1- 4 317 478
- DE-A1- 10 053 990
- DE-A1- 19 856 994
- DE-U1- 20 318 269
- US-A- 2 600 586
- US-A- 4 373 926
- US-A- 4 642 070
- US-A- 4 961 719
- US-B1- 6 432 009

## Beschreibung

### Gebiet der Erfindung

Die Erfindung betrifft eine Getriebevorrichtung, wie sie bei Antrieben von Maschinen aller Art zum Einsatz kommt, wenn verschiedene Drehzahlen und/oder Drehmomente erzielt werden sollen, insbesondere betrifft die Erfindung eine Getriebevorrichtung für Zweiräder, wie z.B. Fahrräder.

### Stand der Technik

Es ist bekannt, dass beim Antrieb verschiedenster Geräte wie Fahrräder, Motorfahrzeuge, Maschinen aller Art etc. oft die Drehzahl und das aufgewendete Drehmoment variieren. Dies hängt vom verwendeten Antrieb wie Elektromotoren, Muskelkraft, Wasserkraft etc. ab. Um bei der angetriebenen Anlage verschiedene Drehzahlen und/oder verschiedene Kräfte/Drehmomente zu erzielen werden in der Regel Getriebe eingesetzt.

Speziell beim Anlaufen einer Anlage oder unter wechselnder Last ist es sinnvoll, das Übersetzungsverhältnis eines Getriebes zu verändern, um es damit dem aktuellen Lastfall anpassen zu können. Speziell von Fahrrädern sind manuelle Getriebe bekannt, bei denen das Übersetzungsverhältnis durch Umlegen der Kette von einem Zahnkranz auf einen anderen Zahnkranz erfolgt.

Im Stand der Technik sind auch Getriebe bekannt, bei denen automatisch geschaltet wird. Die Veränderung des Übersetzungsverhältnisses erfolgt bei Anlagen gemäß dem Stand der Technik aufgrund der Messung der Drehzahl des Antriebs.

Die meisten Automatikgetriebe haben so genannte Schaltstufen, die durch den Wechsel von einem Zahnrad auf ein anderes mit anderem Durchmesser hervorgerufen werden.

Die mit unterschiedlichen Zahnradsätzen bestückten Automatikgetriebe müssen meist gekapselt werden, damit sie im Ölbad eines Getriebeöls laufen können, um eine akzeptable Haltbarkeitsdauer und geringe Reibwiderstände zu gewährleisten.

Beim so genannten Variomatic Getrieben, die im Stand der Technik bekannt sind, wird das Übersetzungsverhältnis durch zwei gegeneinander verschiebbare, kegelige Scheiben verändert, was die Haltbarkeit der dabei verwendeten Riemen und die maximal mögliche Bandbreite des Übersetzungsverhältnisses einschränkt.

Die gattungsgemäße DE 35 01 663 A1 offenbart ein Getrieberad mit variabler Übersetzung, wobei das Getrieberad für ein Kettengetriebe aus einem Zentralrad besteht, in dessen peripherem Bereich Kettenräder über Freilaufkupplungen an Führungselementen gelagert sind, die gegenüber dem Zentralrad zwischen zwei radialen Grenzpositionen verschiebbar angebracht sind. Die Führungselemente sind gleichzeitig am Umfang eines ovalen Führungskörpers gelagert, der in Richtung einer Durchmesserlinie des Zentralrades geradlinig verschiebbar und in dieser Richtung mit einem Federelement beaufschlagt ist. Die radiale Position der Führungselemente gegenüber dem Zentralrad wird durch ein Kräftegleichgewicht zwischen der durch die Kette zu übertragenden Kräfte einerseits und durch die zu diesen entgegengesetzte Kraft des Federelements andererseits bestimmt. Entsprechend der durch die Kette zu übertragenden Zugkraft ergibt sich auf diese Weise ein Kräftegleichgewicht, eine bestimmte radiale Position der Führungselemente und damit ein bestimmter wirksamer Radius des Getrieberades. Das Übersetzungsverhältnis stellt sich somit entsprechend der jeweils anstehenden Zugkraft in der Kette selbsttätig ein.

Die DE 43 17 478 A1 offenbart ein Zugmittel getriebe, mit einer Antriebswelle, mit einem antriebsseitigen Satz planetenartig umlaufender, drehbar gelagerter Satellitenräder, mit einem Zugmittel, insbesondere einer Rollen- oder Zahnkette oder einem Zahnriemen, das (die, der) die Satellitenräder formschlüssig umfasst und die Antriebskraft auf die Antriebswelle überträgt, ferner mit einer Vorrichtung zur bevorzugt stufenlos stellbaren Änderung des radialen Abstandes der Satellitenräder-Achsen von der Achse der Antriebs- bzw. der Abtriebswelle zur Änderung des Übersetzungsverhältnisses, mit einer Einrichtung zur Synchronisation dieser Änderung zwischen den beiden Wellen bzw. zur Regulierung der Zugmittelspannung im laufenden Betrieb sowie mit Einrichtungen, die eine ausgleichende Eigendrehung der umlaufenden Satellitenräder während der radialen Verschiebung ihrer Achsen zulassen.

Weitere Getriebevorrichtungen sind z.B. bekannt aus DE 198 56 994 A1, US 4,642,070 A, US 4,961,719 A, DE 203 18 269 U1, US 6,432,009 B1, US 4,373,926 A, US 2,600,586 A, EP 0 071 498 A und DE 100 53 990 A1.

### Zusammenfassung der Erfindung

Demgegenüber liegt der Erfindung die Aufgabe zugrunde, eine weiterentwickelte Getriebevorrichtung bereitzustellen, die einen höheren Benutzungskomfort und/oder eine einfachere Fertigung erlaubt.

Die Aufgabe wird erfindungsgemäß durch eine Getriebevorrichtung gemäß dem unabhängigen Anspruch 1 gelöst. Vorteilhafte Ausführungsformen sind in den abhängigen Ansprüchen beschrieben.

Erfindungsgemäß wird eine Getriebevorrichtung bereitgestellt, die angepasst ist, das Übersetzungsverhältnis drehmomentabhängig und im Wesentlichen stufenlos einzustellen. Das Übersetzungsverhältnis wird folglich automatisch angepasst. Die Getriebevorrichtung wird bevorzugt als mechanisches Getriebe ausgeführt.

Speziell bei Fahrrädern, bei denen durch den Radfahrer, der über die Kurbeln seine Kraft auf den Antrieb überträgt, wobei sich die Drehzahl und das Drehmoment ständig ändern, hat ein stufenloses drehmomentabhängiges, mechanisches Automatikgetriebe entscheidende Vorteile. Der Fahrer braucht nicht mehr manuell jeden Schaltvorgang selber auszuführen. Er fährt stets mit einer Übersetzung, die den momentanen Gegebenheiten angepasst ist. Zudem kann durch die stufenlose Übersetzungseinstellung die Fahrsituation genauer berücksichtigt werden. Es finden keine abrupten Übergänge zwischen diskreten Gängen mehr statt. Hierdurch ermöglicht die Erfindung ein sehr viel gleichmäßigeres und angenehmeres Fahren. Der Fahrkomfort wird deutlich verbessert.

Die Getriebevorrichtung der vorliegenden Erfindung kann so angepasst werden, dass sich das Übersetzungsverhältnis bei steigendem Drehmoment verringert. Fährt beispielsweise ein Rahfahrer eine Steigung an, so steigt bei konstanter Übersetzung und konstanter Leistung das aufzubringende Drehmoment. Dies wird von den meisten Radfahrern als unangenehm empfunden. Um dem entgegen zu wirken verringert das erfindungsgemäße Getriebe automatisch die Übersetzung und senkt somit das aufzubringende Drehmoment.

Zur Übersetzungsanpassung nutzt die Erfindung eine Relativbewegung zwischen einer Welle des Fahrrads und einer Hülse aus, die sich auf der Welle befindet. Diese Relativbewegung wird durch ein Federelement kontrolliert. Bevorzugt ist dieses Federelement eine Spiralfeder, je nach baulicher Realisierung sind jedoch auch andere Federformen oder andere Arten von Federelementen einsetzbar. Das Federelement ist an einem Ende starr mit der Welle und an dem anderen Ende starr mit der Hülse verbunden. Die Bezeichnung starr ist hier relativ zum Federweg der Feder zu verstehen.

Weiterhin umfasst die Getriebevorrichtung mindestens ein Arm, der fest mit der Welle verbunden ist. Bevorzugt weist die Getriebevorrichtung eine Mehrzahl von Armen auf. Die Arme dienen als Befestigungspunkte für die Hebelarmlager, folglich könnten sich auch alle Befestigungspunkte auf einer Scheibe befinden, so dass keine einzelnen Arme ausgebildet wären. Zur Materialersparnis und somit auch zur Gewichtsreduktion ist die Ausbildung von einzelnen Armen jedoch vorteilhaft.

Die Hülse der Getriebevorrichtung weist vorteilhafterweise einen Hülsenflansch auf.

Weiterhin weist die Getriebevorrichtung bevorzugt mindestens ein Kraftübertragungselement auf, das starr mit einem Hebel verbunden ist und das zur Kraftübertragung auf ein Antriebsmittel dient. Das Kraftübertragungselement ist insbesondere eine Riemenscheibe oder ein Zahnrad. Entsprechend der gewählten Ausführungsform für die Kraftübertragungselemente wird als Antriebsmittel z.B. ein Riemen oder eine Kette gewählt. Da jedoch zur Kraftübertragung auf den Riemen oder die Kette nur der äußere Bereich benötigt wird, kann das Kraftübertragungselement auch aus einem Segment einer Riemenscheibe oder eines Zahnrads bestehen, hierdurch kann weiteres Material eingespart werden.

Die Form der Kraftübertragungselemente sollte auf Größe und Bewegungsablauf abgestimmt sein, um einen maximalen Umschlingungswinkel zu gewährleisten.

Bei der Verwendung von Zahnrädern ist darauf zu achten, dass die Kraftübertragungselemente sich nur in solchen Positionen befinden, dass sie auch in die Kette eingreifen können. Hierzu ist eine stufenweise Bewegung vorteilhaft.

Die Hebel, die mit den Kraftübertragungselementen verbunden sind, sind an den Armen gelagert. Jeder Hebel ist an je einem Arm mittels eines Hebelarmlagers gelagert.

Zwischen jedem Hebel und dem Hülsenflansch ist eine Stange vorgesehen, die auf einer Seite drehbar mit dem Hebel und auf der anderen Seite drehbar mit dem Hülsenflansch verbunden ist. Da diese Stange nur auf Zug belastet wird, kann sie auch durch einen Riemen oder ein Seil oder ein anderes Element ersetzt werden, dass auf Zug belastbar ist.

Für eine kompaktere Bauweise und/oder für die Erzielung eines größeren Übersetzungsbereichs können die Stangen sich auf unterschiedlichen Seiten relativ zum Hülsenflansch gesehen befinden und somit auch auf unterschiedlichen Seiten mit dem Hülsenflansch verbunden sein. Besonders vorteilhaft ist es, wenn sich die Stangen abwechselnd je auf der einen Seite und auf der anderen Seite des Hülsenflansches befinden. So kann auch ein größerer Bewegungsbereich der Hülse auf der Welle erzielt werden.

Die hülsenseitigen Stangenlager können im Wesentlichen äquidistant zueinander auf dem Hülsenflansch angeordnet werden. Hierdurch wird bei je gleich langen Stangen und je gleichlangen Hebeln erreicht, dass automatisch alle Kraftübertragungselemente den gleichen Abstand von der Welle haben. Sie befinden sich alle auf einem Kreis.

Alternativ können die hülsenseitigen Stangenlager auch mit unterschiedlichen Abständen zueinander auf dem Hülsenflansch angebracht werden. Dann befinden sich die Kraftübertragungselemente auf einer Ellipse. Dies kann gewünscht sein, um z.B. Ungleichmäßigkeiten bei der Kraftübertragung auszugleichen, die auf der Anordnung der Tretarme beruhen. Der Radfahrer kann kaum in jeder Lage der Tretarme die gleiche Kraft auf den Antrieb übertragen. Der gleiche Effekt kann auch durch Verwendung ungleich langer Stangen bzw. Hebel erzielt werden.

Alternativ zum Hülsenflansch kann die Hülse mit einem Hülsenzahnrad ausgestattet sein. Bei dieser Ausführungsform ist das Kraftübertragungselement starr mit einem Kraftübertragungszahnrad verbunden, das zur Kraftübertragung auf das Antriebsmittel dient. Das Kraftübertragungszahnrad greift in das Hülsenzahnrad ein, wobei das Kraftübertragungszahnrad an dem Arm mittels eines Kraftübertragungslagers gelagert ist, an dem in der vorhergehenden Ausführungsform der Hebel gelagert war.

Die Kraftübertragungslager können im Wesentlichen äquidistant zueinander auf einem Kreis angeordnet sein oder auch mit unterschiedlichen Abständen. Hier gelten analog die oben ausgeführten Überlegungen zu den hülsenseitigen Stangenlagern.

Bevorzugt sind die Kraftübertragungselemente derart über die Kraftübertragungslager miteinander verbunden, dass alle Kraftübertragungselemente gleich weit von der Welle entfernt sind. Dies wird durch das Hülsenzahnrad sichergestellt.

Vorteilhafterweise können bei allen zuvor genannten Ausführungsformen die Hebelverhältnisse zwischen Kraftübertragungselementen und Armen variiert werden.

Die Anzahl der Kraftübertragungselemente samt zugehöriger Funktionskomponenten kann an die Verwendung und/oder den gewünschten Außendurchmesserbereich angepasst sein. Mit Funktionskomponenten sind hier diejenigen Teile gemeint, die zur Lagerung und/oder Verbindung der Kraftübertragungselemente mit der Hülse dienen, z.B. Arm, Hebel, Stange oder Arm und Kraftübertragungszahnrad. In einer bevorzugten Ausführungsform, wie auch in den Zeichnungen dargestellt, sind sechs Kraftübertragungselemente samt zugehörigen Funktionskomponenten vorgesehen.

Durch geeignete Wahl der Abmessungen der Elemente der Getriebevorrichtung kann ein großer Übersetzungsbereich realisiert werden.

Die Kraftübertragungselemente können zur räumlichen Entzerrung der Bewegungsabläufe auf einer Seite der Arme angeordnet werden, und die Lager können derart angepasst werden, insbesondere so dass sie je eine Welle durch einen Arm aufweisen, dass die Stangen bzw. die Kraftübertragungszahnräder auf der anderen Seite der Arme angeordnet sind, wobei die Kraftübertragungselemente mit den Stangen bzw. den Kraftübertragungszahnräder fest verbunden sind. Hierdurch kann zugleich eine bessere Kraftverteilung erzielt werden.

Gemäß der Erfindung kann das Federelement vorgespannt sein. Hierdurch kann sichergestellt werden, dass im lastfreien Zustand die größtmögliche Übersetzung vorliegt, d.h. die Kraftübertragungselemente in einer äußeren Position gehalten werden. Weiterhin kann die Vorspannung des Federelements insbesondere während des Betriebs des Getriebes angepasst werden. So können die Getriebeeigenschaften an die aktuellen Wünsche des Benutzers angepasst werden. Genauso ist eine Anpassung an Radfahrer mit unterschiedlicher Konstitution möglich.

Die Funktion der Spiralfeder kann auch durch andere Federelemente übernommen werden, die innerhalb des Systems so angeordnet sind, dass sich die Kraftübertragungselemente im Ruhezustand in äußerster Position befinden. Bei der Einwirkung von Kräften auf das System werden sie gegen den Widerstand der Federelemente nach innen bewegt.

Die Vorspannung des Federelements kann angepasst werden mittels einer Vorspanneinrichtung, die insbesondere aus einem Stirnzahnrad, das mit der Hülse starr verbunden ist, und einer Zahnschnecke, die über eine Verstellvorrichtung verstellbar ist und die über eine Halterung mit der Welle starr verbunden ist, besteht. Je nach Anforderungen können Federelemente mit unterschiedlichen Federkennlinien verwendet werden.

Gemäß noch einer weiteren Ausführungsform der Erfindung ist die Hülse relativ zur Welle in mindestens einer Lage arretierbar zur Festeinstellung mindestens einer Übersetzung. Dies ermöglicht es dem Fahrer auf Wunsch ein konstantes Übersetzungsverhältnis einzustellen. Es ist auch eine Vielzahl von Arretierungspositionen realisierbar. Insbesondere kann der Radfahrer das Getriebe in einem gerade anliegenden Übersetzungsverhältnis arretieren.

Ebenso ist es möglich, dass das Übersetzungsverhältnis im Wesentlichen stufenlos anpassbar ist mittels einer Einstellvorrichtung, mit der die relative Drehung zwischen Hülse und Welle eingestellt werden kann.

Die Getriebevorrichtung kann so angepasst werden, dass die Fliehkräfte der Kraftübertragungselemente ausgenutzt werden, wozu insbesondere ihre Massen entsprechend angepasst werden können. Hierbei sorgen insbesondere bei hohen Geschwindigkeiten die Fliehkräfte der Kraftübertragungselemente für die Beibehaltung eines bestimmten Übersetzungsverhältnisses, insbesondere der größten Übersetzung.

Weiterhin kann die Getriebevorrichtung einen Antriebsmittelspanner umfassen, insbesondere einen Ketten- oder Riemenspanner. Kettenspanner sind von herkömmlichen Fahrradschaltungen bekannt. Dort dienen sie ausschließlich dazu, eine Lose der Kette zu verhindern. Erfindungsgemäß kann die Spannung des Antriebsmittels über den Antriebsmittelspanner eingestellt werden. Hierdurch lässt sich bei der erfindungsgemäßen Getriebevorrichtung das Übersetzungsverhältnis beeinflussen, dies eröffnet eine zusätzliche Steuerungsmöglichkeit. Der Antriebsmittelspanner kann so angepasst werden, dass während des Betriebs des Getriebes über ihn das Übersetzungsverhältnis angepasst werden kann.

Allgemein kann die erfindungsgemäße Getriebevorrichtung durch geeignete Anordnung der Hebel oder Zahnradelemente so ausgelegt werden, dass sich die Kraftübertragungselemente im Wesentlichen bei steigendem Drehmoment der Welle nähern. Dies ist der Fall, der auch in den Zeichnungen dargestellt ist.

Alternativ kann die erfindungsgemäße Getriebevorrichtung auch so ausgelegt werden, dass sich die Kraftübertragungselemente im Wesentlichen bei steigendem Drehmoment von der Welle entfernen. Dies ist durch Anpassung der Hebelelemente und/oder des Federelements möglich. Eine solche Getriebevorrichtung kann z.B. an der Achse des anzutreibenden Rades, insbesondere des Hinterrades eines Fahrrads, verwendet werden.

Gemäß der Erfindung kann ein Getriebevorrichtungssystem gebildet werden, das eine Mehrzahl von erfindungsgemäßen Getriebevorrichtungen umfasst. Es können beispielsweise zwei oder mehr in Reihe geschaltete Getriebevorrichtungen verwendet werden.

Ein Getriebevorrichtungssystem kann auch mehrere gegenläufige Getriebe aufweisen, die so angeordnet sind, dass ein größerer Verstellbereich, insbesondere bei reduziertem Gesamtdurchmesser, erreicht wird. Es ist ein Getriebesystem möglich, bei dem an einem Antriebsrad eine erste Getriebevorrichtung, bei der sich die Kraftübertragungselemente im Wesentlichen bei steigendem Drehmoment von einer Welle des Antriebsrads entfernen, und an der Tretkurbelwelle eine zweite Getriebevorrichtung, bei der sich die Kraftübertragungselemente im Wesentlichen bei steigendem Drehmoment der Welle annähern, vorgesehen ist.

Durch die Verwendung von zwei gegenläufigen Getrieben kann zudem leichter auf einen Antriebsmittelspanner verzichtet werden.

Durch die Verwendung von leicht austauschbaren und leicht zugänglichen Standardbauteilen mit geringen Reibungsverlusten ist ein solches System sehr wartungsfreundlich und effektiv. Zudem ist durch die Verwendung vieler Gleichteile eine besonders kostengünstige Herstellung möglich. Die Bewegungen der Teile innerhalb der Getriebevorrichtung sind im Wesentlichen einfach, langsam und klein, folglich kann auf aufwendige und teure Lager verzichtet werden.

Weiterhin ist anzumerken, dass die erfindungsgemäße Getriebevorrichtung ohne eine externe Steuerung betrieben werden kann.

Weitere Vorteile und Merkmale werden aus der Beschreibung der beigefügten Zeichnungen deutlich werden.

### Kurze Beschreibung der Zeichnungen

- Fig. 1: zeigt eine perspektivische Darstellung einer ersten Ausführungsform einer Getriebevorrichtung gemäß der vorliegenden Erfindung bei großem Übersetzungsverhältnis.
- Fig. 2: zeigt eine perspektivische Darstellung der ersten Ausführungsform einer Getriebevorrichtung gemäß der vorliegenden Erfindung bei kleinerem Übersetzungsverhältnis.
- Fig. 3: zeigt eine perspektivische Übersichtsdarstellung der Getriebevorrichtung aus Fig. 1.
- Fig. 4: zeigt eine schematische Seitenquerschnittsansicht der ersten Ausführungsform einer Getriebevorrichtung gemäß der vorliegenden Erfindung.
- Fig. 5: zeigt eine schematische Frontalansicht der ersten Ausführungsform einer Getriebevorrichtung gemäß der vorliegenden Erfindung bei großem Übersetzungsverhältnis.
- Fig. 6: zeigt eine schematische Frontalübersichtsansicht der ersten Ausführungsform einer Getriebevorrichtung gemäß der vorliegenden Erfindung bei kleinerem Übersetzungsverhältnis.
- Fig. 7: zeigt eine schematische Frontalansicht einer zweiten Ausführungsform einer Getriebevorrichtung gemäß der vorliegenden Erfindung bei großem Übersetzungsverhältnis.
- Fig. 8: zeigt eine schematische Seitenquerschnittsansicht der zweiten Ausführungsform einer Getriebevorrichtung gemäß der vorliegenden Erfindung.
- Fig. 9: zeigt eine schematische Seitenquerschnittsansicht einer Getriebevorrichtung gemäß der vorliegenden Erfindung.

### Detaillierte Beschreibung der Zeichnungen

In den Zeichnungen sind gleiche oder ähnliche Elemente mit gleichen Bezugszeichen versehen.

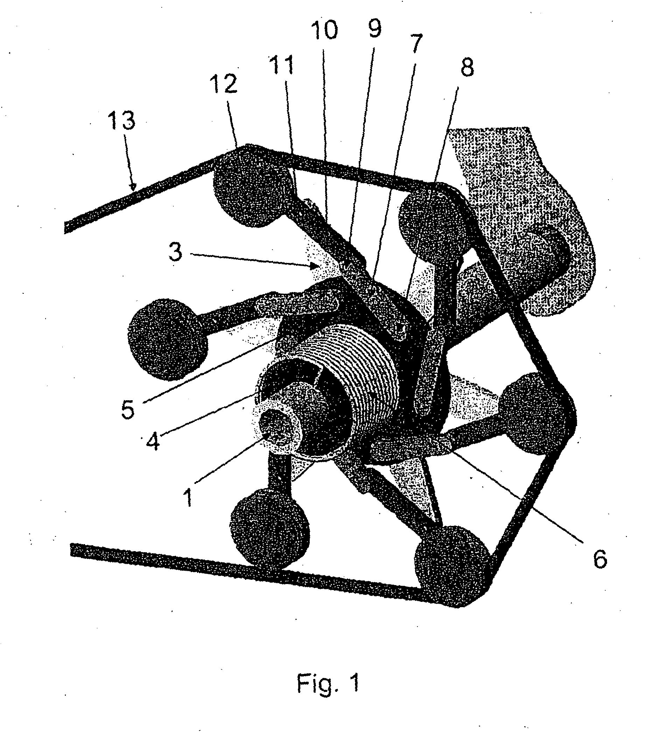

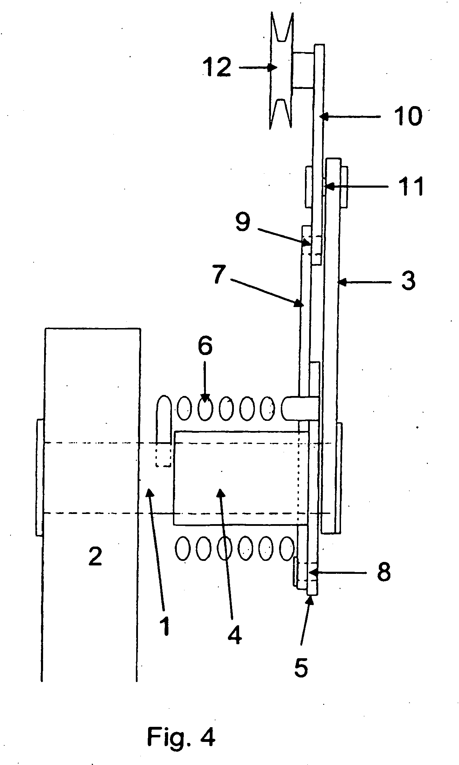

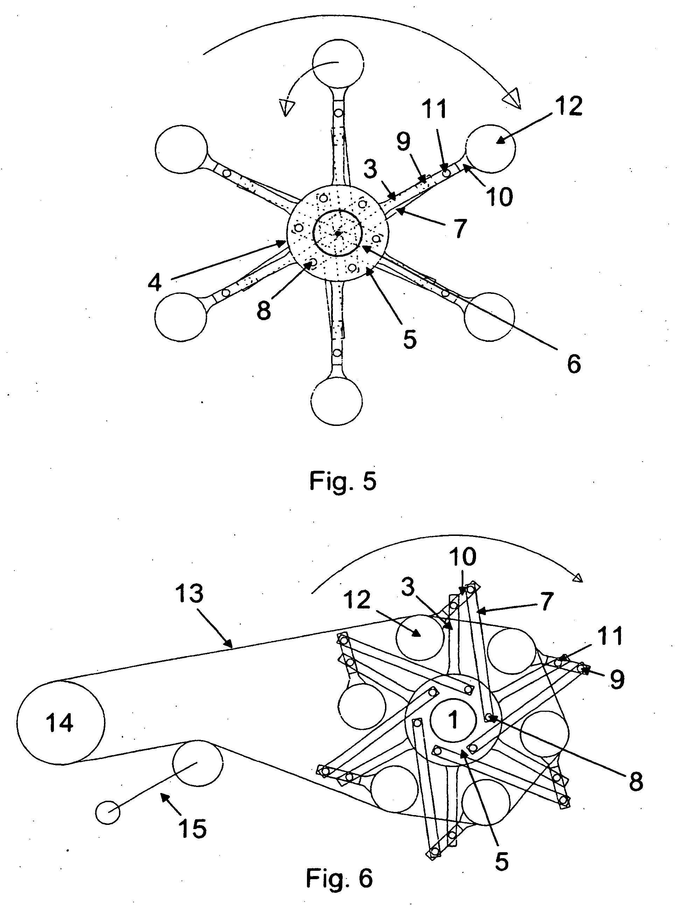

Figur 1 zeigt eine perspektivische Darstellung einer ersten Ausführungsform einer Getriebevorrichtung gemäß der vorliegenden Erfindung bei großem Übersetzungsverhältnis. Zur vertieften Veranschaulichung der folgenden Beschreibung dienen neben der Figur 1 die schematischen Darstellungen der Figuren 4 und 5.

Die Tretkurbeln sind an einer Welle 1 montiert, die in einem Lager 2 gelagert ist. Auf die Welle 1 ist eine Hülse 4 gesteckt. Ein Federelement 6, das hier als Spiralfeder 6 abgebildet ist, ist auf der einen Seite mit der Welle 1 und auf der anderen Seite mit der Hülse 4 verbunden. Die Hülse weist weiterhin einen Hülsenflansch 5 auf.

An der Welle 1 sind Arme 3 starr befestigt, diese weisen Hebelarmlager 11 auf. An den Hebelarmlagern 11 sind Hebel 10 gelagert, die starr mit Kraftübertragungselementen 12 verbunden sind. Die Kraftübertragungselemente 12 sind bei dieser Ausführungsform Riemenscheiben 12, die die Antriebskraft auf das Antriebsmittel 13, hier einen Riemen 13, übertragen. An der den Kraftübertragungselementen 12 gegenüberliegenden Enden der Hebel 10 weisen diese hebelseitige Stangenlager 9 auf. An den hebelseitigen Stangenlagern 9 sind Stangen 7 befestigt, die auf der anderen Seite durch hülsenseitige Stangenlager 8 mit dem Hülsenflansch 5 verbunden sind. Der Hülsenflansch 5 kann zur Gewichtsoptimierung auch Materialaussparungen aufweisen, zusätzlich oder alternativ kann er aus einzelnen Armen bestehen, die so ausgeführt sind, dass sie je ein Stangenlager 8 aufnehmen.

Bei Zug auf das Antriebsmittel 13 zur Übertragung einer Drehbewegung, bewegen sich die fest mit Hebeln 10 verbundenen Kraftübertragungselemente 12 durch Drehung von Hebeln 10 um die Hebelarmlager 11 gegen den Widerstand des vorgespannten Felderelements 6 nach innen. Dies geschieht in Abhängigkeit der Federkennlinie des Felderelements 6 so lange, bis die Übersetzung klein genug ist, um das Gesamtsystem in Bewegung zu setzen. Hierbei wird die Spannung des Federelements 6 erhöht. Die drehmomentabhängige Veränderung des Übersetzungsverhältnisses wird durch die Federkennlinie und Vorspannung der Spiralfeder 10 bestimmt. Über die Höhe der Vorspannung des Federelements 6 kann das Getriebe auf das maximale Drehmoment, das über die Welle 1 eingeleitet wird, ' abgestimmt werden, beim Fahrrad z.B. abhängig von der Leistungsfähigkeit des Fahrradfahrers.

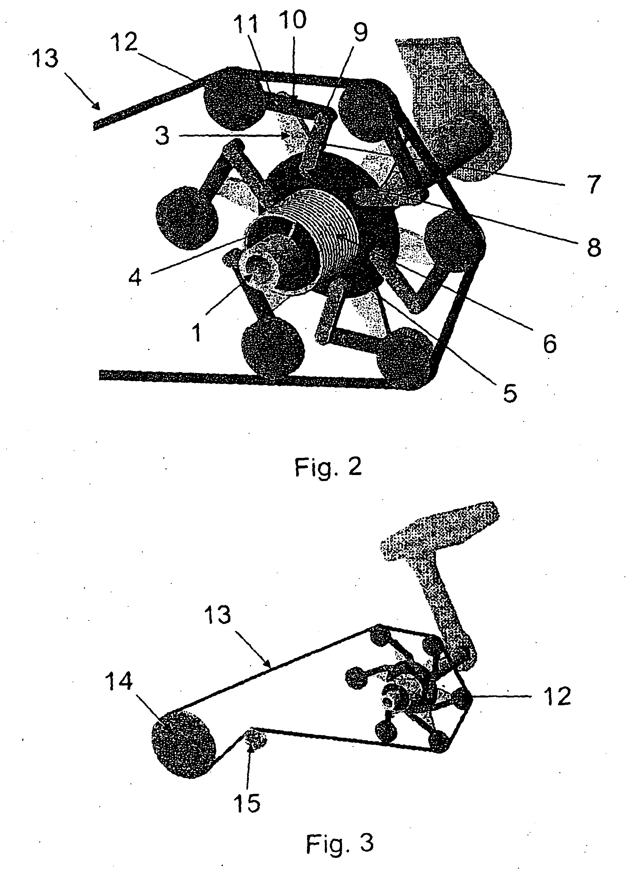

Über die Stange 7, die mit dem Hülsenflansch 5 verbunden ist, wird für alle Kraftübertragungselemente 12 der gleiche Flugkreisradius sichergestellt. Durch die kleinere Übersetzung ist weniger Kraft beim Treten notwendig. Eine solche deutlich kleinere Übersetzung ist in Figur 2 und Figur 6 dargestellt.

Bei großen Drehzahlen wirkt als weitere erhebliche Kraft die Fliehkraft auf die Getriebevorrichtung und drückt zusätzlich zur Federkraft des vorgespannten Federelements 6 die Kraftübertragungselemente 12 in die äußerste Position, wodurch dann, wie bei maximaler Drehzahl gewünscht die größtmögliche Übersetzung des Getriebes erreicht wird. Über das Gewicht der Kraftübertragungselemente 12, der maximalen Drehzahl und des Durchmessers des Getriebes kann der Einfluss der Fliehkraft auf die Stellung der Kraftübertragungselemente 12 zusätzlich gesteuert werden.

Ein Zurückstellen der Getriebevorrichtung in die Ausgangsstellung, d.h. das größte Übersetzungsverhältnis, kann durch ungefähr eine halbe Umdrehung entgegen der Antriebsrichtung erzielt werden.

Die einwandfreie Funktion des Getriebes hängt von der idealen Federkennlinie und Vorspannung des Federelements 6 ab. Dies wird abgestimmt auf die Antriebskraft, welche über Welle 1, und die Bremskraft, die über das Antriebsmittel 13 in das Getriebe eingeleitet wird.

Die Getriebevorrichtung kann wie auf den Zeichnungen aus sechs Kraftübertragungselementen 12 samt zugehöriger Komponenten aber auch aus jeder beliebigen anderen Anzahl von Kraftübertragungselementen 12 bestehen. Die sinnvolle Anzahl der Kraftübertragungselemente 12 samt zugehörigen Komponenten ist auf die Größenverhältnisse des Getriebes abzustimmen. Damit sich die Kraftübertragungselemente 12 nur in die gewünschte Richtung bewegen können, kann eine Sperrung, zum Beispiel an den Armen 3 vorgesehen werden.

Die Arme 3 können auch durch eine Scheibe oder einen Ring ersetzt werden, diese müssen jedoch mit Welle 1 fest verbunden sein.

Über einen verschiebbaren Sperrbolzen, der den Hebel 10 nach einer bestimmten Winkelbewegung blockieren kann, kann das mögliche Übersetzungsverhältnis reduziert werden.

Figur 3 zeigt eine perspektivische Übersichtsdarstellung der Getriebevorrichtung aus Figur 1. Das Antriebsrad des anzutreibenden Rades ist hier mit 14 bezeichnet. Weiter ist ein Antriebsmittelspanner 15 dargestellt, der die Lose des Antriebsmittels 13 verhindert. Selbiges ist für ein kleines Übersetzungsverhältnis in Figur 6 schematisch abgebildet.

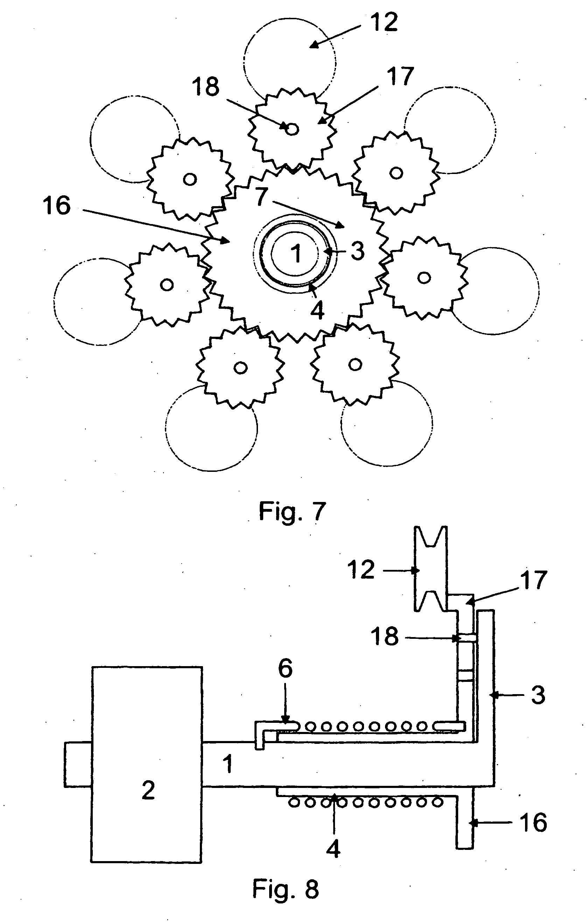

Figur 7, die eine ähnliche Ansicht zeigt wie Figur 5, zeigt eine schematische Frontalansicht einer zweiten Ausführungsform einer Getriebevorrichtung gemäß der vorliegenden Erfindung bei großem Übersetzungsverhältnis. Figur 8, die eine ähnliche Ansicht zeigt wie Figur 4, zeigt eine schematische Seitenquerschnittsansicht dieser Ausführungsform.

Die prinzipielle Funktionsweise ist die gleiche, wie bei der oben erläuterten ersten Ausführungsform. Die dortigen Erläuterungen gelten für die zweite Ausführungsform analog. Im Gegensatz zur ersten Ausführungsform ist hier der Hülsenflansch 5 durch ein Hülsenzahnrad 16 ersetzt. Die Kraftübertragungselemente 12 sind mit Kraftübertragungszahnrädern 17 starr verbunden, die wiederum mittels Kraftübertragungszahnradlagem 18 an den Armen 3 gelagert sind. Die Kraftübertragungszahnräder 17 greifen in das Hülsenzahnrad 16 ein.

Die Vorspannung des Federelements 6 sorgt dafür, dass die Kraftübertragungselemente 12 über das Hülsenzahnrad 16 und das mit ihm im Eingriff stehende Kraftübertragungszahnrad 17 gegen einen Anschlag im Ruhezustand in äußerster Position gehalten werden.

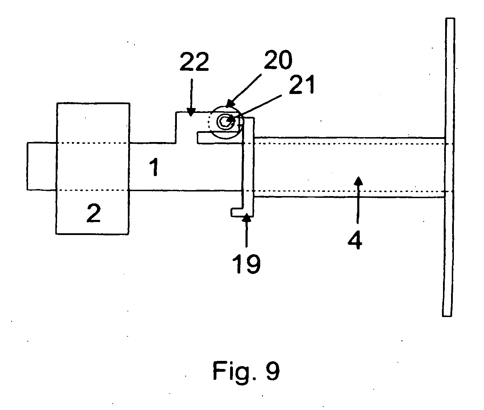

Figur 9 zeigt eine schematische Seitenquerschnittsansicht einer Getriebevorrichtung gemäß der vorliegenden Erfindung. Die im Folgenden beschriebene Vorrichtung kann zusammen mit den bisher beschriebenen Ausführungsformen eingesetzt werden, ist jedoch für deren Funktionstauglichkeit nicht notwendig.

Diese Vorrichtung ist eine Möglichkeit, die Vorspannung des Federelements 6 anzupassen. Die Hülse 4 ist mit einem Stirnzahnrad 19 ausgestattet. Dieses steht in Wechselwirkung mit einer Zahnschnecke 20, die wiederum mittels einer Halterung 22 an der Welle 1 befestigt ist. Die Zahnschnecke 20 ist drehbar mittels einer Verstellvorrichtung 21, die z.B. einen Verstellimbus umfasst. Durch Verstellung der Zahnschnecke 20 kann die Vorspannung des Federelements 6 angepasst werden.

Diese Verstellung des Getriebes kann durch eine geeignete Vorrichtung auch bei laufendem Getriebe vorgenommen werden, um die Übersetzung manuell oder abhängig von einer wie auch immer gearteten Steuerung zu verändern.

Zusätzlich lässt sich mit dieser Vorrichtung bei entferntem Federelement 6 durch drehen der Zahnschnecke 20 der Flugkreisdurchmesser der Kraftübertragungselemente 12 und damit die Übersetzung des Getriebes verstellen. Die Funktion der drehmomentabhängigen Steuerung entfällt dann.

### Bezugszeichen:

- 1: Welle
- 2: Lager
- 3: Arm
- 4: Hülse
- 5: Hülsenflansch
- 6: Federelement (Spiralfeder)
- 7: Stange
- 8: hülsenseitiges Stangenlager
- 9: hebelseitiges Stangenlager
- 10: Hebel
- 11: Hebelarmlager
- 12: Kraftübertragungselement (Riemenscheibe)
- 13: Antriebsmittel (Riemen)
- 14: Antriebsrad
- 15: Antriebsmittelspanner
- 16: Hülsenzahnrad
- 17: Kraftübertragungszahnrad
- 18: Kraftübertragungszahnradlager
- 19: Stirnzahnrad
- 20: Zahnschnecke
- 21: Verstellvorrichtung
- 22: Halterung

## Patentansprüche

1. Getriebevorrichtung, die angepasst ist, das Übersetzungsverhältnis drehmomentabhängig und im Wesentlichen stufenlos einzustellen,
wobei mindestens ein Kraftübertragungselement (12), insbesondere eine Riemenscheibe oder ein Zahnrad oder ein Segment einer Riemenscheibe oder ein Segment eines Zahnrads, vorgesehen ist;
**dadurch gekennzeichnet, dass**
die Anpassung des Übersetzungsverhältnisses auf einer Relativbewegung zwischen einer Welle (1) und einer Hülse (4) beruht;
die Hülse (4) einen Hülsenflansch (5) aufweist; wobei das Kraftübertragungselement (12) starr mit einem Hebel (10) verbunden ist und zur Kraftübertragung auf ein Antriebsmittel (13) dient; und
die Getriebevorrichtung mindestens eine Stange (7) oder ein Verbindungselement, das auf Zug belastbar ist, umfasst, die auf einer Seite drehbar mit dem Hebel (10) und auf der anderen Seite drehbar mit dem Hülsenflansch (5) verbunden ist.

2. Getriebevorrichtung nach Anspruch 1, wobei die Getriebevorrichtung eine mechanische Getriebevorrichtung ist.

3. Getriebevorrichtung nach Anspruch oder 2, wobei die Getriebevorrichtung so angepasst ist, um das Übersetzungsverhältnis bei steigendem Drehmoment zu verringern.

4. Getriebevorrichtung nach einem der vorhergehenden Ansprüche, wobei die Relativbewegung zwischen der Welle (1) und der Hülse (4), die sich auf der Welle (1) befindet, durch ein Federelement (6), insbesondere eine Spiralfeder (6), kontrolliert wird.

5. Getriebevorrichtung nach Anspruch 4, wobei das Federelement (6) an einem Ende starr mit der Welle (1) und an dem anderen Ende starr mit der Hülse (4) verbunden ist.

6. Getriebevorrichtung nach einem der vorhergehenden Ansprüche, wobei mindestens ein Arm (3) fest mit der Welle (1) verbunden ist.

7. Getriebevorrichtung nach Anspruch 6, wobei der Hebel (10) an dem Arm (3) gelagert ist.

8. Getriebevorrichtung nach einem der vorhergehenden Ansprüche, wobei die Getriebevorrichtung eine Mehrzahl von Stangen (7) aufweist, und wobei die Stangen (7) nicht alle auf der gleichen Seite des Hülsenflansches (5) mit dem Hülsenflansch (5) verbunden sind.

9. Getriebevorrichtung nach einem der vorhergehenden Ansprüche, wobei hülsenseitige Stangenlager (8) im Wesentlichen äquidistant zueinander auf dem Hülsenflansch (5) angeordnet sind.

10. Getriebevorrichtung nach Anspruch 9, wobei hülsenseitige Stangenlager (8) nicht äquidistant zueinander auf dem Hülsenflansch (5) angeordnet sind.

11. Getriebevorrichtung nach einem der vorhergehenden Ansprüche, wobei die Getriebevorrichtung eine Mehrzahl von Kraftübertragungselementen (12) aufweist, und wobei die Kraftübertragungselemente (12) derart über den Hülsenflansch (5) miteinander verbunden sind, dass alle Kraftübertragungselemente (12) gleich weit von der Welle (1) entfernt sind.

12. Getriebevorrichtung nach einem der Ansprüche 1 bis 6, wobei die Hülse (4) ein Hülsenzahnrad (16) aufweist.

13. Getriebevorrichtung nach einem der Ansprüche 1 bis 6 oder 12, wobei das mindestens ein Kraftübertragungselement (12) starr mit einem Kraftübertragungszahnrad (17) verbunden ist und das zur Kraftübertragung auf das Antriebsmittel (13) dient.

14. Getriebevorrichtung nach Anspruch 13, wobei das Kraftübertragungszahnrad (17) mittels eines Kraflübertragungslagers (18) an dem Arm (3) gelagert ist.

15. Getriebevorrichtung nach Anspruch 14, wobei die Getriebevorrichtung eine Mehrzahl von Kräftübertragungslagern (18) aufweist, und wobei die Kraftübertragungslager (18) im Wesentlichen äquidistant zueinander auf einem Kreis angeordnet sind.

16. Getriebevorrichtung nach Anspruch 14, wobei die Getriebevorrichtung eine Mehrzahl von Kraftübertragungslagem aufweist, und wobei die Kraftübertragungslager (18) nicht äquidistant zueinander auf einem Kreis angeordnet sind.

17. Getriebevorrichtung nach einem der Ansprüche 14 bis 16, wobei die Getriebevorrichtung eine Mehrzahl von KraRübertragungselementen (12) und eine Mehrzahl von Kraftübertragungslagern (18) aufweist, und wobei die Kraftübertragungselemente (12) derart über die Kraftübertragungslager (18) miteinander verbunden sind, dass alle Kraftübertragungselemente (12) gleich weit von der Welle (1) entfernt sind.

18. Getriebevorrichtung nach einem der vorhergehenden Ansprüche, wobei das Antriebsmittel (13) ein Riemen oder eine Kette ist.

19. Getriebevorrichtung nach Anspruch 6 oder einem der vorhergehenden Ansprüche soweit rückbezogen auf Anspruch 6, wobei das Hebelverhältnis zwischen Kraftübertragungselement (12) und Arm (3) variierbar ist.

20. Getriebevorrichtung nach einem der vorhergehenden Ansprüche, wobei die Anzahl der Kraftübertragungselemente (12) samt zugehöriger Funktionskomponenten an die Verwendung und/oder den gewünschten Außendurchmesserbereich angepasst ist, insbesondere ist die Anzahl sechs.

21. Getriebevorrichtung nach Anspruch 13 oder einem der vorhergehenden Ansprüche soweit rückbezogen auf Anspruch 4, wobei die Getriebevorrichtung eine Mehrzahl von Kraftübemagungselementen (12), Armen (3) und Hebeln (10) aufweist, und wobei die Kraftübertragungselemente (12) auf einer Seite der Arme (3) angeordnet sind, und die Lager (11, 18) derart angepasst sind, so dass sie je eine Welle durch einen Arm aufweisen, dass die Hebel (10) bzw. die Kraftübertragungszahnräder (17) auf der anderen Seite der Arme (3) angeordnet sind, wobei die Kraftübertragungselemente (12) mit den Hebeln (10) bzw. den Kraftüberträgungszahnrädern (17) fest verbunden sind.

22. Getriebevorrichtung nach Anspruch 4 oder einem der vorhergehenden Ansprüche soweit rückbezogen auf Anspruch 4, wobei das Federelement (6) vorgespannt ist.

23. Getriebevorrichtung nach Anspruch 22, wobei die Vorspannung des Federelements (6) während des Betriebs der Getriebevorrichtung angepasst werden kann.

24. Getriebevorrichtung nach Anspruch 22 oder 23, wobei die Vorspannung des Federelements (6) angepasst werden kann mittels einer Vorspanneinrichtung, die aus einem Stirnzahnrad (19), das mit der Hülse (4) starr verbunden ist, und einer Zahnschnecke (20), die über eine Verstellvorrichtung (21) verstellbar ist und die über eine Halterung (22) mit der Welle (1) starr verbunden ist, besteht.

25. Getriebevorrichtung nach Anspruch 4 oder einem der vorhergehenden Ansprüche soweit rückbezogen auf Anspruch 4, wobei je nach Anforderungen ein Federelement (6) mit unterschiedlichen Federkennlinien verwendet werden kann.

26. Getriebevorrichtung nach Anspruch 4 oder einem der vorhergehenden Ansprüche soweit rückbezogen auf Anspruch 4, wobei die Getriebevorrichtung eine Mehrzahl von Kranübertragungselementen (12) aufweist, und wobei das Federelement (6) die Kraftübertragungselemente (12) in einer äußeren Position hält, wenn keine Kraft von außen auf die Getriebevorrichtung wirkt.

27. Getriebevorrichtung nach einem der vorhergehenden Ansprüche, wobei die Hülse (4) relativ zur Welle (1) in mindestens einer Lage arretierbar ist zur Festeinstellung mindestens einer Übersetzung.

28. Getriebevorrichtung nach einem der vorhergehenden Ansprüche, wobei das Übersetzungsverhältnis im Wesentlichen stufenlos anpassbar ist mittels einer Einstellvorrichtung, mit der die relative Drehung zwischen Hülse (4) und Welle (1) eingestellt werden kann.

29. Getriebevorrichtung nach einem der vorhergehenden Ansprüche, wobei die Getriebevorrichtung eine Mehrzahl von Kraftübertragungselementen (12) aufweist, und wobei die Getriebevorrichtung so angepasst ist, dass die Fliehkräfte der Kraftübertragungselemente (12) ausgenutzt werden, wozu Massen der Kraftübernagungselemente (12) entsprechend angepasst werden können.

30. Getriebevorrichtung nach einem der vorhergehenden Ansprüche, wobei die Getriebevorrichtung eine Mehrzahl von Kraftübertragungselementen (12) aufweist, und wobei die Fliehkräfte der Kraftübertragungselemente (12), insbesondere bei hohen Geschwindigkeiten, für die Beibehaltung eines bestimmten Übersetzungsverhältnisses sorgen.

31. Getriebevorrichtung nach einem der vorhergehenden Ansprüche, wobei die Getriebevorrichtung eine Mehrzahl von Kraftübertragungselementen (12) aufweist, und wobei sich die KraRübertragungselemente (12) im Wesentlichen bei steigendem Drehmoment der Welle (1) nähern.

32. Getriebevorrichtung nach einem der vorhergehenden Ansprüche, wobei die Getriebevorrichtung zum Einsatz in einem Zweirad, insbesondere einem Fahrrad, angepasst ist.

33. Getriebevorrichtungssystem, das eine Mehrzahl von Getriebevorrichtungen nach einem oder mehreren der vorhergehenden Ansprüche umfasst.

34. Getriebevorrichtungssystem nach Anspruch 33, das zwei oder mehr in Reihe geschaltete Getriebevorrichtungen aufweist.

35. Getriebe vorrichtungssystem nach Anspruch 33, das mehrere gegenläufige Getriebevorrichtung aufweist, die so angeordnet sind, dass ein größerer Verstellbereich, insbesondere bei reduziertem Gesamtdurchmesser, erreicht wird.

36. Getriebevorrichtungssystem nach einem der Ansprüche 33 bis 35, wobei die Getriebevorrichtung eine Mehrzahl von Kraftübertragungselementen (12) aufweist, und wobei an einem Antriebsrad (14) eine erste Getriebevorrichtung, bei der sich die Kraftübertragungselemente (12) im Wesentlichen bei steigendem Drehmoment von einer Welle des Antriebsrads entfernen, und an der Welle (1) eine zweite Getriebevorrichtung, bei der sich die Kraftübertragungselemente (12) im Wesentlichen bei steigendem Drehmoment der Welle (1) annähern, vorgesehen ist.

## Claims

1. A transmission assembly which is adapted to adjust the gear ratio in torque-dependent and substantially continuously variable manner,
wherein at least one power transmission element (12), in particular a pulley or a gear wheel or a segment of a pulley or a segment of a gear wheel, is provided,
**characterised in that**
the adaptation of the gear ratio is based on a relative movement between a shaft (1) and a sleeve (4),
the sleeve (4) has a sleeve flange (5); the power transmission element (12) being connected rigidly to a lever (10) and serving to transmit power to a drive means (13); and
the transmission assembly comprises at least one rod (7) or a connecting element which can be placed under tensile load, which rod is connected on one hand rotatably to the lever (10) and on the other hand rotatably to the sleeve flange (5).

2. A transmission assembly according to Claim 1, the transmission assembly being a mechanical transmission assembly.

3. A transmission assembly according to Claim 1 or 2, the transmission assembly being adapted such as to reduce the gear ratio as the torque increases.

4. A transmission assembly according to one of the preceding claims, the relative movement between the shaft (1) and the sleeve (4) which is located on the shaft (1) being controlled by a spring element (6), in particular a spiral spring (6).

5. A transmission assembly according to Claim 4, the spring element (6) being connected rigidly to the shaft (1) at one end and rigidly to the sleeve (4) at the other end.

6. A transmission assembly according to one of the preceding claims, at least one arm (3) being connected securely to the shaft (1).

7. A transmission assembly according to Claim 6, the lever (10) being mounted on the arm (3).

8. A transmission assembly according to one of the preceding claims, the transmission assembly having a plurality of rods (7), and the rods (7) not all being connected to the sleeve flange (5) on the same side of the sleeve flange (5).

9. A transmission assembly according to one of the preceding claims, sleeve-side rod bearings (8) being arranged substantially equidistant from each other on the sleeve flange (5).

10. A transmission assembly according to Claim 9, sleeve-side rod bearings (8) being arranged non-equidistant from each other on the sleeve flange (5).

11. A transmission assembly according to one of the preceding claims, the transmission assembly having a plurality of power transmission elements (12), and the power transmission elements (12) being connected together via the sleeve flange (5) such that all the power transmission elements (12) are at equal distances from the shaft (1).

12. A transmission assembly according to one of Claims 1 to 6, the sleeve (4) having a sleeve gear wheel (16).

13. A transmission assembly according to one of Claims 1 to 6 or 12, the at least one power transmission element (12) being connected rigidly to a power transmission gear wheel (17) and serving to transmit power to the drive means (13).

14. A transmission assembly according to Claim 13, the power transmission gear wheel (17) being mounted on the arm (3) by means of a power transmission bearing (18).

15. A transmission assembly according to Claim 14, the transmission assembly having a plurality of power transmission bearings (18), and the power transmission bearings (18) being arranged substantially equidistant from each other on a circle.

16. A transmission assembly according to Claim 14, the transmission assembly having a plurality of power transmission bearings, and the power transmission bearings (18) being arranged non-equidistant from each other on a circle.

17. A transmission assembly according to one of Claims 14 to 16, the transmission assembly having a plurality of power transmission elements (12) and a plurality of power transmission bearings (18), and the power transmission elements (12) being connected together via the power transmission bearings (18) such that all the power transmission elements (12) are at equal distances from the shaft (1).

18. A transmission assembly according to one of the preceding claims, the drive means (13) being a belt or a chain.

19. A transmission assembly according to Claim 6 or one of the preceding claims if depending from Claim 6, the lever ratio between power transmission element (12) and arm (3) being variable.

20. A transmission assembly according to one of the preceding claims, the number of power transmission elements (12) plus associated functional components being adapted to the use and/or the desired range of external diameters, in particular the number is six.

21. A transmission assembly according to Claim 13 or one of the preceding claims if depending from Claim 4, the transmission assembly having a plurality of power transmission elements (12), arms (3) and levers (10), and the power transmission elements (12) being arranged on one side of the arms (3), and the bearings (11, 18) being adapted such that they each have a shaft through an arm, that the levers (10) or the power transmission gear wheels (17) are located on the other side of the arms (3), the power transmission elements (12) being securely connected to the rods (10) or the power transmission gear wheels (17).

22. A transmission assembly according to Claim 4 or one of the preceding claims if depending from Claim 4, the spring element (6) being pre-stressed.

23. A transmission assembly according to Claim 22, the initial stress of the spring element (6) being able to be adapted during operation of the transmission assembly.

24. A transmission assembly according to Claim 22 or 23, the initial stress of the spring element (6) being able to be adapted by means of a pre-stressing means which consists of a spur gear wheel (19) which is rigidly connected to the sleeve (4), and a toothed worm (20) which is adjustable by means of an adjustment device (21) and which is rigidly connected to the shaft (1) via a holding means (22).

25. A transmission assembly according to Claim 4 or one of the preceding claims if depending from Claim 4, a spring element (6) with different spring characteristics being able to be used, according to requirements.

26. A transmission assembly according to Claim 4 or one of the preceding claims if depending from Claim 4, the transmission assembly having a plurality of power transmission elements (12), and the spring element (6) holding the power transmission elements (12) in an outer position if no force acts externally on the transmission assembly.

27. A transmission assembly according to one of the preceding claims, the sleeve (4) being able to be locked in at least one position relative to the shaft (1) for fixed adjustment of at least one ratio.

28. A transmission assembly according to one of the preceding claims, the gear ratio being adaptable substantially continuously variably by means of a setting device with which the relative rotation between sleeve (4) and shaft (1) can be set.

29. A transmission assembly according to one of the preceding claims, the transmission assembly having a plurality of power transmission elements (12), and the transmission assembly being adapted such that the centrifugal forces of the power transmission elements (12) are utilised, for which purpose masses of the power transmission elements (12) can be adapted accordingly.

30. A transmission assembly according to one of the preceding claims, the transmission assembly having a plurality of power transmission elements (12), and the centrifugal forces of the power transmission elements (12), in particular at high speeds, ensuring that a certain gear ratio is maintained.

31. A transmission assembly according to one of the preceding claims, the transmission assembly having a plurality of power transmission elements (12), and the power transmission elements (12) approach the shaft (1) substantially as the torque increases.

32. A transmission assembly according to one of the preceding claims, the transmission assembly being adapted for use in a two-wheeled vehicle, in particular a bicycle.

33. A transmission assembly system which comprises a plurality of transmission assemblies according to one or more of the preceding claims.

34. A transmission assembly system according to Claim 33, which has two or more transmission assemblies connected in series.

35. A transmission assembly system according to Claim 33, which has a plurality of contra-rotating transmission assemblies which are arranged such that a larger adjustment region, in particular with reduced overall diameter, is obtained.

36. A transmission assembly system according to one of Claims 33 to 35, the transmission assembly having a plurality of power transmission elements (12), and a first transmission assembly, in which the power transmission elements (12) move away from a shaft of the drive wheel substantially as the torque increases, being provided on a drive wheel (14), and a second transmission assembly, in which the power transmission elements (12) substantially approach the shaft (1) as the torque increases, being provided on the shaft (1).

## Revendications

1. Dispositif de transmission apte à régler le rapport de transmission en fonction du couple et pour l'essentiel en continu, dans lequel est prévu au moins un élément de transmission de force (12), en particulier une poulie à courroie ou une roue dentée ou un segment de poulie à courroie ou un segment de roue dentée, **caractérisé en ce que** l'adaptation du rapport de transmission repose sur un mouvement relatif entre un arbre (1) et une douille (4), la douille (4) possède une bride de douille (5), l'élément de transmission de force (12) étant solidaire d'un levier (10) et servant à transmettre la force à un moyen d'entraînement (13), et le dispositif de transmission comprend au moins une tige (7) ou un élément de liaison qui peut être sollicité en traction qui, d'un côté, est relié à pivotement au levier (10) et, de l'autre côté, est relié à pivotement à la bride de douille (5).

2. Dispositif de transmission selon la revendication 1, dans lequel le dispositif de transmission est un dispositif de transmission mécanique.

3. Dispositif de transmission selon la revendication 1 ou 2, dans lequel le dispositif de transmission est apte à réduire le rapport de transmission lorsque le couple augmente.

4. Dispositif de transmission selon l'une des revendications précédentes, dans lequel le mouvement relatif entre l'arbre (1) et la douille (5) qui se trouve sur l'arbre (1) est commandé par un élément élastique (6), en particulier un ressort spiral (6).

5. Dispositif de transmission selon la revendication 4, dans lequel l'élément élastique (6) est solidarisé avec l'arbre (1) à l'une de ses extrémités et avec la douille (4) à l'autre extrémité.

6. Dispositif de transmission selon l'une des revendications précédentes, dans lequel au moins un bras (3) est solidaire de l'arbre (1).

7. Dispositif de transmission selon la revendication 6, dans lequel le levier (10) est monté sur le bras (3).

8. Dispositif de transmission selon l'une des revendications précédentes, dans lequel le dispositif de transmission comprend une pluralité de tiges (7) et dans lequel les tiges (7) ne sont pas toutes reliées à la bride de douille (5) sur le même côté de la bride de douille (5).

9. Dispositif de transmission selon l'une des revendications précédentes, dans lequel des paliers de tige côté douille (8) sont montés de manière essentiellement équidistante les uns par rapport aux autres sur la bride de douille (5).

10. Dispositif de transmission selon la revendication 9, dans lequel des paliers de tige côté douille (8) ne sont pas montés de manière équidistante les uns par rapport aux autres sur la bride de douille (5).

11. Dispositif de transmission selon l'une des revendications précédentes, dans lequel le dispositif de transmission comprend une pluralité d'éléments de transmission de force (12), et dans lequel les éléments de transmission de force (12) sont reliés entre eux par l'intermédiaire de la bride de douille (5), de manière que tous les éléments de transmission de force (12) soient éloignés de l'arbre (1) d'une même distance.

12. Dispositif de transmission selon l'une des revendications 1 à 6, dans lequel la douille (4) possède une roue dentée de douille (16).

13. Dispositif de transmission selon l'une des revendications 1 à 6 ou 12, dans lequel le au moins un élément de transmission de force (12) est solidaire d'une roue dentée de transmission de force (17) et sert à transmettre une force au moyen d'entraînement (13).

14. Dispositif de transmission selon la revendication 13, dans lequel la roue dentée de transmission de force (17) est montée sur le bras (3) à l'aide d'un palier de transmission de force (18).

15. Dispositif de transmission selon la revendication 14, dans lequel le dispositif de transmission comprend une pluralité de paliers de transmission de force (18), et dans lequel les paliers de transmission de force (18) sont disposés sur un cercle de manière essentiellement équidistante les uns par rapport aux autres.

16. Dispositif de transmission selon la revendication 14, dans lequel le dispositif de transmission comprend une pluralité de paliers de transmission de force, et dans lequel les paliers de transmission de force sont disposés sur un cercle d'une manière non équidistante les uns par rapport aux autres.

17. Dispositif de transmission selon l'une des revendications 14 à 16, dans lequel le dispositif de transmission comprend une pluralité d'éléments de transmission de force (12) et une pluralité de paliers de transmission de force (18), et dans lequel les éléments de transmission de force (12) sont reliés ensemble par l'intermédiaire des paliers de transmission de force (18), de sorte que tous les éléments de transmission de force (12) soient éloignés de l'arbre (1) d'une même distance.

18. Dispositif de transmission selon l'une des revendications précédentes, dans lequel le moyen d'entraînement (13) est une courroie ou une chaîne.

19. Dispositif de transmission selon la revendication 6 ou selon l'une des revendications précédentes en tant qu'elle fait référence à la revendication 6, dans lequel le rapport de levier entre l'élément de transmission de force (12) et le bras (13) est variable.

20. Dispositif de transmission selon l'une des revendications précédentes, dans lequel le nombre des éléments de transmission de force (12) et de tous les éléments fonctionnels associés est adapté à l'utilisation et/ou à la plage des diamètres extérieurs recherchés, ce nombre étant en particulier de six.

21. Dispositif de transmission selon la revendication 13 ou selon l'une des revendications précédentes en tant qu'elle fait référence à la revendication 4, dans lequel le dispositif de transmission comprend une pluralité d'éléments de transmission de force (12), de bras (3) et de leviers (10), et dans lequel les éléments de transmission de force (12) sont montés sur un côté des bras (3) et les paliers (11, 18) sont aptes à posséder chacun un arbre traversant un bras, pour que les leviers (10) ou les roues dentées de transmission de force (17) soient montés sur l'autre côté des bras (3), les éléments de transmission de force (12) étant solidaires des leviers (10), respectivement des roues dentées de transmission de force (17).

22. Dispositif de transmission selon la revendication 4 ou selon l'une des revendications précédentes en tant qu'elle fait référence à la revendication 4, dans lequel l'élément élastique (6) est précontraint.

23. Dispositif de transmission selon la revendication 22, dans lequel la précontrainte de l'élément élastique (6) peut être corrigée pendant le fonctionnement du dispositif de transmission.

24. Dispositif de transmission selon la revendication 22 ou 23, dans lequel la précontrainte de l'élément élastique (6) peut être corrigée à l'aide d'un dispositif de précontrainte composé d'un pignon droit (19), solidaire de la douille (4), et d'une crémaillère (20) apte à être déplacée à l'aide d'un dispositif de déplacement (21) et solidaire de l'arbre (1) par l'intermédiaire d'un support (22).

25. Dispositif de transmission selon la revendication 4 ou selon l'une des revendications précédentes en tant qu'elle fait référence à la revendication 4, dans lequel, en fonction des nécessités, on utilise un élément élastique (6) offrant une caractéristique élastique différente.

26. Dispositif de transmission selon la revendication 4 ou selon l'une des revendications précédentes en tant qu'elle fait référence à la revendication 4, dans lequel le dispositif de transmission comprend une pluralité d'éléments de transmission de force (12) et dans lequel l'élément élastique (6) maintient les éléments de transmission de force (12) dans une position extérieure lorsque aucune force n'est exercée de l'extérieur sur le dispositif de transmission.

27. Dispositif de transmission selon l'une des revendications précédentes, dans lequel la douille (4) peut être verrouillée par rapport à l'arbre (1) dans au moins une position afin de déterminer au moins un rapport.

28. Dispositif de transmission selon l'une des revendications précédentes, dans lequel le rapport de transmission peut être adapté d'une manière essentiellement continue grâce à un dispositif de réglage qui permet de régler la rotation relative entre la douille (4) et l'arbre (1).

29. Dispositif de transmission selon l'une des revendications précédentes, dans lequel le dispositif de transmission comprend une pluralité d'éléments de transmission de force (12), et dans lequel le dispositif de transmission est conçu pour exploiter les forces centrifuges des éléments de transmission de force (12), les masses des éléments de transmission de force (12) pouvant, à cet effet, être adaptées de manière appropriée.

30. Dispositif de transmission selon l'une des revendications précédentes, dans lequel le dispositif de transmission comprend une pluralité d'éléments de transmission de force (12), et dans lequel les forces centrifuges des éléments de transmission de force (12), en particulier aux vitesses élevées, se chargent de maintenir un certain rapport de transmission.

31. Dispositif de transmission selon l'une des revendications précédentes, dans lequel le dispositif de transmission comprend une pluralité d'éléments de transmission de force (12), et dans lequel les éléments de transmission de force (12) se rapprochent de l'arbre (1) essentiellement lorsque le couple augmente.

32. Dispositif de transmission selon l'une des revendications précédentes, dans lequel le dispositif de transmission est conçu pour être utilisé dans un deux-roues, en particulier une bicyclette.

33. Système de dispositifs de transmission comprenant une pluralité de dispositifs de transmission selon une ou plusieurs des revendications précédentes.

34. Système de dispositifs de transmission selon la revendication 33, comprenant deux dispositifs de transmission montés en série ou plus.

35. Système de dispositifs de transmission selon la revendication 33, comprenant plusieurs dispositifs de transmission de sens opposé qui sont montés de manière à atteindre une plage de réglage supérieure, en particulier avec un diamètre total réduit.

36. Système de dispositifs de transmission selon l'une des revendications 33 à 35, dans lequel les dispositifs de transmission comprennent une pluralité d'éléments de transmission de force (12), et dans lequel sont prévus, sur une roue motrice (14), un premier dispositif de transmission dont les éléments de transmission de force (12) s'éloignent de l'arbre de la roue motrice essentiellement lorsque le couple augmente et, sur un arbre (1), un deuxième dispositif de transmission dont les éléments de transmission de force (12) se rapprochent essentiellement lorsque le couple de l'arbre (1) augmente.
